(19) **Europäisches Patentamt / European Patent Office / Office européen des brevets**

(11) **EP 2 171 241 B1**

(12) **FASCICULE DE BREVET EUROPEEN**

(45) Date de publication et mention de la délivrance du brevet:
**08.03.2017 Bulletin 2017/10**

(51) Int Cl.:
*F02D 41/00* *(2006.01)*  *F02D 41/02* *(2006.01)*

(21) Numéro de dépôt: **08827245.5**

(22) Date de dépôt: **31.07.2008**

(86) Numéro de dépôt international:
**PCT/FR2008/051445**

(87) Numéro de publication internationale:
**WO 2009/022074 (19.02.2009 Gazette 2009/08)**

(54) **PROCEDE D'ESTIMATION DE LA PRESSION DE SURALIMENTATION D'UN MOTEUR DIESEL SURALIMENTE**

VERFAHREN ZUR SCHÄTZUNG DES ÜBERLADEDRUCKS EINES AUFGELADENEN DIESELMOTORS

METHOD FOR ESTIMATING THE SUPERCHARGING PRESSURE OF A SUPERCHARGED DIESEL ENGINE

(84) Etats contractants désignés:
**AT BE BG CH CY CZ DE DK EE ES FI FR GB GR HR HU IE IS IT LI LT LU LV MC MT NL NO PL PT RO SE SI SK TR**

(30) Priorité: **02.08.2007 FR 0705660**

(43) Date de publication de la demande:
**07.04.2010 Bulletin 2010/14**

(73) Titulaire: **Renault S.A.S.**
**92100 Boulogne-Billancourt (FR)**

(72) Inventeur: **PETILLON, Yohan**
**F-78180 Montigny Le Bretonneux (FR)**

(56) Documents cités:
**EP-A- 1 398 490**    **WO-A-93/12332**
**WO-A-2007/063258**    **FR-A- 2 860 836**
**FR-A- 2 894 616**    **US-A- 6 035 640**
**US-A1- 2003 010 019**

Printed by Jouve, 75001 PARIS (FR)

## Description

La présente invention concerne de manière générale le contrôle d'un moteur de véhicule automobile Diesel suralimenté par turbocompresseur.

Elle concerne plus particulièrement un procédé d'estimation de la pression de suralimentation d'un tel moteur et une utilisation d'un tel procédé.

De tels procédé d'estimation sont généralement connus, voir par exemple les publications de demandes de brevets US6035640 ou US2003010019.

ARRIERE-PLAN TECHNOLOGIQUE

Dans un moteur Diesel suralimenté, l'air frais est introduit dans une conduite d'admission et est comprimé par une turbine d'un turbocompresseur, avant d'arriver dans un collecteur relié à une vanne d'admission d'une chambre de combustion d'un cylindre moteur. Le débit d'air introduit dans le collecteur est régulé par un volet d'admission situé en amont de ce collecteur dans la conduite d'admission.

Les moteurs Diesel suralimentés connus utilisent un capteur de pression de suralimentation situé dans la conduite d'admission, en amont du volet d'admission, pour mesurer la pression de suralimentation, c'est-à-dire, la pression de l'air dans la conduite d'admission en amont du volet d'admission.

Une unité de contrôle électronique enregistre grâce à ce capteur la valeur de la pression de suralimentation.

L'unité de contrôle électronique enregistre également les informations données par d'autres capteurs (de température, de pression, de débit, par exemple) présents sur les lignes d'admission et d'échappement d'air dans le moteur, et contrôle cette circulation d'air en commandant des actionneurs (des volets ou des vannes par exemple).

L'enregistrement de la pression de suralimentation est particulièrement importante dans le cas des moteurs Diesel munis d'un pain catalytique appelé piège à oxydes d'azote.

Ce piège à oxydes d'azote est placé en sortie du moteur, sur la ligne d'échappement, et permet de limiter la quantité d'oxydes d'azote polluants formés lors de la combustion de l'air et du carburant dans la chambre de combustion et rejetés dans l'atmosphère avec les gaz d'échappement.

Dans une première phase dite de stockage, les molécules d'oxydes d'azote sont piégées dans le piège à oxydes d'azote. Dans une deuxième phase, dite de déstockage et de réduction, elles sont réduites en molécules de diazote et de dioxygène, non polluantes, qui sont relâchées avec les gaz d'échappement.

La phase de déstockage et de réduction des oxydes d'azote nécessite une régulation très précise de la richesse du mélange air/carburant afin de la maintenir proche de la valeur 1, ce qui signifie que le dioxygène et le carburant doivent être introduits en proportions stoechiométriques dans la chambre de combustion, de sorte que ces deux réactifs soient entièrement consommés pendant la combustion.

La quantité d'air introduite à chaque cycle du cylindre moteur étant précisément connue, il est nécessaire, pour maintenir une richesse proche de la valeur 1, que l'unité de contrôle électronique contrôle et ajuste la quantité de carburant injecté dans la chambre de combustion.

Or, cette quantité d'air introduite dans la chambre de combustion peut être déterminée par l'unité de contrôle électronique grâce à la valeur de la pression de suralimentation.

Cependant, la présence d'un capteur de pression de suralimentation augmente les coûts de fabrication du moteur et occupe une entrée du calculateur de l'unité de contrôle moteur.

OBJET DE L'INVENTION

Par rapport à l'Etat de la technique précité, la présente invention propose de diminuer le nombre de capteurs utilisés pour le contrôle d'un moteur Diesel suralimenté en supprimant le capteur de pression de suralimentation afin de diminuer les coûts de fabrication et de libérer une entrée du calculateur de l'unité de contrôle électronique.

Pour cela, l'invention propose un procédé qui estime par le calcul la pression de suralimentation à partir de différentes données, dont certaines sont mesurées à partir des capteurs déjà présents sur la ligne d'admission d'air du moteur Diesel concerné.

A cet effet, on propose selon l'invention, un procédé d'estimation de la pression de suralimentation d'un gaz circulant dans une conduite d'admission de section géométrique connue d'un moteur Diesel suralimenté, contrôlé par une unité de contrôle électronique, comportant un volet d'admission dont une section efficace dépend de sa position dans la conduite d'admission, et un collecteur, la section géométrique de la conduite d'admission, la constante spécifique du gaz circulant dans la conduite d'admission et le rapport entre la capacité calorifique à pression constante et la capacité calorifique à volume constant caractéristique du gaz circulant dans la conduite d'admission étant préalablement enregistrées dans la mémoire de l'unité de contrôle électronique, ledit procédé comportant les étapes suivantes :

a) on enregistre la position du volet d'admission ;

b) on mesure la pression du gaz dans le collecteur ;

c) on mesure la température du gaz entre le volet d'admission et le collecteur ;

d) on détermine le débit du gaz au niveau du volet d'admission ;

e) on détermine la section efficace du volet d'admission et un coefficient correcteur de perte de charge en fonction de ladite position du volet d'admission ;

f) on détermine la pression de suralimentation par une formule dite « de perte de charge » donnant une première pression PS1 calculée, telle que :

$$PS1 = PC + (QV^2.R.TV)/(2.PC.SC^2) \, . \, CP(\%F)$$

g) on compare le rapport entre la pression dans le collecteur et le résultat obtenu à l'étape e) à une valeur seuil, dite « de perte de charge » : si ce rapport est supérieur à ladite valeur seuil, alors on enregistre ledit résultat de l'étape e) en tant que pression de suralimentation ; sinon, on effectue les étapes suivantes ;

h) on détermine la pression de suralimentation par une deuxième formule dite « du Barré de Saint Venant », donnant une deuxième pression PS2 calculée, telle que :

$$PS2 = PC.[\, 1/2 + (\, 1/4 + (QV^2.R.TV)/(SE(\%F)^2.PC^2).(G-1)/(2.G)\, )^{1/2}\, ]^{(G/(G-1))}$$

i) on compare le rapport entre la pression dans le collecteur et le résultat de l'étape h) à une valeur seuil, dite « du Barré de Saint Venant » : si ce rapport est supérieur à ladite valeur seuil du Barré de Saint Venant, alors on enregistre ledit résultat de l'étape h) en tant que pression de suralimentation ; sinon, on effectue l'étape suivante ;

j) on détermine la pression de suralimentation par une troisième formule dite « du Barré de Saint Venant en régime critique », selon laquelle:

$$PS3 = QV.(R.TV)^{1/2} / [\, SE(\%F).G^{1/2}\, ] \, . \, (\, 2/(G+1)\, )^{[\,(G+1)/(2.(G-1)\,]}$$

et on enregistre le résultat alors obtenu comme pression de suralimentation.

Ce procédé d'estimation permet d'obtenir une valeur suffisamment précise de la pression de suralimentation pour assurer un fonctionnement satisfaisant du moteur et du piège à oxydes d'azote.

Selon une première caractéristique avantageuse du procédé, la section efficace du volet d'admission est déterminée par une calibration dépendant uniquement de la position du volet d'admission.

Selon une autre caractéristique avantageuse du procédé, le coefficient correcteur de perte de charge est déterminé par une calibration dépendant uniquement de la position du volet d'admission.

Ces calibrations dépendant uniquement de la position du volet d'admission permettent une détermination rapide par l'unité de contrôle électronique de la section efficace du volet d'admission et du coefficient de perte de charge après enregistrement de la position du volet d'admission.

On propose également selon l'invention, une utilisation d'un tel procédé lors de la phase de déstockage et de réduction des oxydes d'azote dans un piège à oxydes d'azote pour maintenir un rapport stoechiométrique entre l'air et le carburant introduit dans la chambre de combustion.

Selon une caractéristique avantageuse de l'invention, l'unité de contrôle électronique du moteur impose que la pression de suralimentation soit égale à la pression dans le collecteur en dehors des phases de déstockage et de réduction des oxydes d'azote et de régénération du piège à oxydes d'azote.

DESCRIPTION DETAILLEE D'UN EXEMPLE DE REALISATION

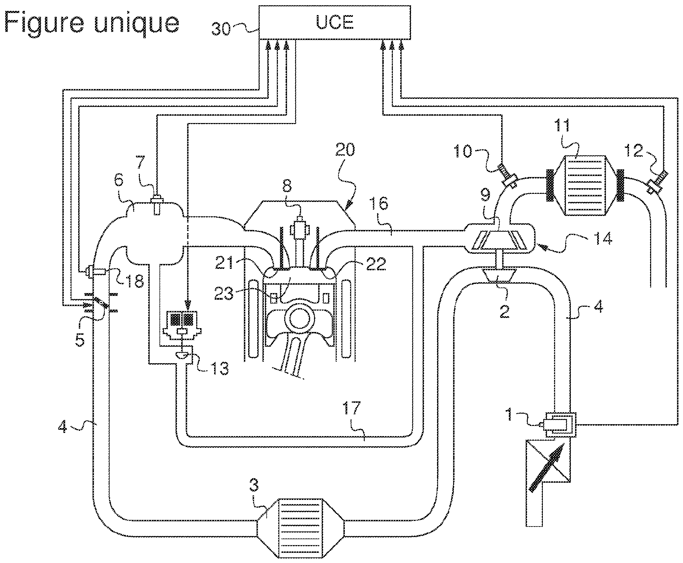

La description qui va suivre, en regard du dessin annexé, donnée à titre d'exemple non limitatif, fera bien comprendre en quoi consiste l'invention et comment elle peut être réalisée.

Sur ce dessin, la figure unique est une vue schématique d'un moteur Diesel suralimenté équipé d'un piège à oxydes d'azote.

Sur la figure unique, on a représenté un moteur Diesel suralimenté comportant une conduite d'admission 4 dans laquelle circule de l'air frais. Le débit d'air frais est mesuré en entrée de la conduite d'admission 4 par un débitmètre d'air 1.

Le moteur comprend un turbocompresseur 14 comportant deux turbines 2, 9. La turbine entraînante 9 est placée dans une conduite d'échappement 16 et entraîne la turbine entraînée 2 placée dans la conduite d'admission 4 afin de comprimer l'air frais y circulant.

Cette compression ayant pour effet de réchauffer l'air, il est prévu sur le trajet de la conduite d'admission 4, un refroidisseur d'air 3 qui refroidit l'air en sortie du turbocompresseur 14.

La conduite d'admission 4 débouche dans un collecteur 6. Elle comporte en amont de ce collecteur 6 un volet d'admission 5. L'orientation du volet d'admission 5 par rapport à l'axe de la conduite d'admission 4 détermine la section efficace SE de freinage de l'air du volet, qui contrôle le débit d'air frais entrant dans le collecteur 6.

Cette orientation est exprimée en pourcentage de fermeture : 0% correspond à la position de pleine ouverture où la surface d'obstruction du volet d'admission 5 dans la conduite d'admission 4 est quasiment nulle, tandis que 100% correspond à la position de fermeture maximale du volet d'admission 5, où la surface d'obstruction du volet d'admission 5 dans la conduite d'admission 4 est maximale. En phase de déstockage et de réduction des oxydes d'azote, la position du volet d'admission 5, notée %F, se situe ainsi typiquement vers 80%.

La section efficace SE du volet d'admission est donc minimale lorsque la position %F est égale à 0%, et est maximale lorsque la position %F est égale à 100%.

Un capteur 18 est prévu dans la conduite d'admission 4, entre le volet d'admission 5 et le collecteur 6 pour mesurer la température TV de l'air.

En outre, un capteur 7 est situé dans le collecteur 6 : il mesure la température TC et la pression PC de l'air dans ledit collecteur 6.

Le collecteur 6 est relié à une valve d'admission 21 d'un cylindre 20 du moteur. L'air comprimé entre via cette valve d'admission 21 dans la chambre de combustion 23 du cylindre 20 et il est prévu un injecteur 8 qui injecte le carburant dans cette chambre.

Après la combustion, les gaz résiduels d'échappement sont expulsés hors de la chambre de combustion 23 par une valve d'échappement 22 dans la conduite d'échappement 16.

Une partie de ces gaz d'échappement est prélevée par un circuit de recirculation 17 qui les ramène au collecteur 6 où ils se mélangent à l'air frais arrivant de la conduite d'admission 4. L'apport de gaz d'échappement dans le collecteur 6 est régulé par une vanne 13 dite EGR (Exhaust Gaz Recirculation).

Les gaz d'échappement étant plus pauvres en dioxygène que l'air frais de la conduite d'admission, le mélange dans le collecteur 6 de l'air frais avec les gaz d'échappement fait chuter le taux de dioxygène du gaz finalement introduit dans la chambre de combustion 23, ce qui a pour effet de diminuer la quantité d'oxydes d'azote formés lors de la combustion.

Les gaz d'échappement qui ne sont pas dirigés dans la conduite de recirculation 17 circulent dans la conduite d'échappement 16 pour arriver à la turbine entraînante 9 du turbocompresseur 14 puis jusqu'à un piège à oxydes d'azote 11 avant d'être libérés dans l'atmosphère.

En amont et en aval du piège à oxydes d'azote 11, deux sondes à dioxygène 10 et 12 plongent dans la conduite d'échappement 16 afin d'évaluer le taux de dioxygène dans les gaz d'échappement avant et après passage dans le piège à oxydes d'azote. Cela permet d'évaluer la richesse du mélange air/carburant et de surveiller le fonctionnement du piège à oxydes d'azote.

Le moteur comporte avantageusement une unité de contrôle électronique (UCE) 30 qui contrôle l'actionnement du volet d'admission 5 et de la vanne EGR 13 pour réguler le débit d'air dans le collecteur 6 et donc la quantité d'air introduite dans la chambre de combustion.

Les commandes à appliquer au volet d'admission 5 et à la vanne EGR 13 sont déterminées par l'unité de contrôle électronique 30 en fonction des informations relevées par tous les capteurs, et notamment ici par le capteur 18 situé entre le volet d'admission 5 et le collecteur 6, le capteur 7 situé dans le collecteur 6, le débitmètre d'air 1 et un capteur de position du volet d'admission 5.

La détermination de ces commandes repose également sur l'enregistrement de la pression de suralimentation dans la conduite d'admission.

En l'absence de capteur de pression de suralimentation, le procédé selon l'invention propose d'estimer la pression de suralimentation PS de l'air dans la conduite d'admission en amont du volet d'admission en fonction des informations données par les autres capteurs précités.

Selon ce procédé, on suppose que la température de suralimentation TS, c'est-à-dire la température de l'air dans la conduite d'admission 4 en amont du volet d'admission 5, est égale à la température TV de l'air en aval du volet d'admission 5.

Si la pression de suralimentation PS est proche de la pression PC de l'air dans le collecteur 6, c'est-à-dire si le rapport PC/PS entre la pression dans le collecteur et la pression de suralimentation est supérieur à une valeur seuil égal à 0,9 environ, le passage au travers du volet d'admission 5 peut être assimilé à une perte de charge, et l'on peut écrire:

$$PS - PC = 1/2 \cdot rho \cdot V^2 \cdot CP(\%F)$$

où

- rho est la masse volumique de l'air,
- V est la vitesse isentropique de l'air dans la conduite,
- CP est un coefficient correcteur de la perte de charge en fonction de la position du volet d'admission 5, d'où la notation CP(%F).

A partir de cette expression, en exprimant le produit rho.$V^2$ en fonction des informations données par les capteurs présents et en supposant que l'air dans la conduite d'admission est un gaz parfait, on détermine selon le procédé, la pression de suralimentation PS grâce à la formule suivante:

$$(1) \ PS = PC + (QV^2 \cdot R \cdot TV)/(2 \cdot PC \cdot SC^2) \cdot CP(\%F)$$

où

- R est la constante spécifique de l'air,
- QV est le débit d'air frais au niveau du volet d'admission 5,
- SC est la section géométrique de la conduite d'admission 4.

Le débit d'air frais QV au niveau du volet d'admission 5 est déterminé à partir de la mesure du débit d'air frais faite à l'entrée de la conduite d'admission par le débitmètre d'air 1.

Le coefficient correcteur CP est calibré empiriquement et dépend de la position du volet d'admission 5. Ce coefficient est nul lorsque le volet d'admission 5 est complètement ouvert (position 0%), et l'on retrouve alors que la pression de suralimentation PS est égale à la pression PC de l'air dans le collecteur 6.

Lorsque le volet d'admission 5 est progressivement fermé, le coefficient correcteur CP augmente rapidement, et la pression de suralimentation PS calculée devient supérieure à la pression dans le collecteur PC.

La calibration empirique du coefficient correcteur CP en fonction de la position %F du volet d'admission 5 montre que, dans le domaine de fonctionnement du volet considéré selon l'invention, il est possible de calibrer le coefficient correcteur CP du volet d'admission uniquement en fonction de la position %F de ce volet.

Si le rapport PC/PS entre la pression PC dans le collecteur et la pression de suralimentation PS est compris entre 0,53 et 1, le débit d'air frais au niveau du volet d'admission 5 s'écrit selon une formule dite « du Barré de Saint Venant ». Cette formule est la suivante :

$$QV = PS \cdot SE(\%F)/(R \cdot TS)^{1/2} \cdot (2 \cdot G/(G-1))^{1/2} \cdot (PC/PS)^{1/G} \cdot [\, 1-(PC/PS)^{((G-1)/G)} \,]^{1/2}$$

où

- G est le rapport entre la capacité calorifique à pression constante et la capacité calorifique à volume constant de l'air circulant dans la conduite d'admission 4,
- SE est la section efficace du volet d'admission 5 en fonction de la position du volet d'admission 5, d'où la notation SE(%F).

Cette formule correspond à l'approximation d'un gaz parfait incompressible et homogène dans un écoulement unidimensionnel de champ de vitesse uniforme et faible, soumis à des échanges adiabatiques et à une faible chute de pression.

A partir de cette expression du débit à travers le volet d'admission 5, on exprime la pression de suralimentation grâce à la formule suivante :

$$(2) \ PS = PC \cdot [\, 1/2 + (\, 1/4 + (QV^2 \cdot R \cdot TV)/(SE(\%F)^2 \cdot PC^2) \cdot (G-1)/(2 \cdot G) \,)^{1/2} \,]^{(G/(G-1))}$$

Une calibration empirique de la section efficace SE en fonction de la position %F du volet d'admission 5 montre que, dans le domaine de fonctionnement du volet considéré selon l'invention, la section efficace SE du volet d'admission 5 dépend uniquement de la position %F de ce volet.

Selon le procédé conforme à l'invention, on estime donc la pression de suralimentation PS par cette formule (2) précitée dite « du Barré de Saint Venant » à partir des informations données par les capteurs présents.

Par exemple, dans un régime de fonctionnement du moteur correspondant à une température de suralimentation TS (prise égale à la température TV en aval du volet d'admission) égale à 313 Kelvin, et pour une position du volet de 80% de fermeture, le débit d'air au niveau du volet d'admission 5 est déterminé égal à 0,033 kilogramme par seconde et la pression PC mesurée dans le collecteur est de $1,14.10^5$ Pascals.

La section SC de la conduite d'admission 4 est typiquement de 15 $cm^2$, la constante spécifique de l'air vaut 287 Joules par kilogramme et par Kelvin et le rapport entre les capacités calorifique à pression et à volume constant G est de 1,4 pour l'air.

Dans ces conditions, la pression de suralimentation PS calculée est de $1,5.10^5$ Pascals.

Enfin, si le rapport entre la pression dans le collecteur et la pression de suralimentation PC/PS est inférieur à 0,53, selon le procédé conforme à l'invention, on détermine alors la pression de suralimentation PS selon une troisième formule dite « du Barré de Saint Venant en régime critique ».

En effet, la vitesse de l'air dans la conduite d'admission 4 atteint alors la limite sonique, ce qui modifie l'expression du débit d'air à travers le volet d'admission 5, qui s'écrit alors :

$$QV = PS.SE(\%F)/(R.TS)^{1/2} . G^{1/2} . (2/(G+1))^{[(G+1)/(2.(G-1))]}$$

La pression de suralimentation peut alors s'écrire selon la formule suivante, dite « du Barré de Saint Venant en régime critique » :

$$(3) \ PS = QV.(R.TV)^{1/2} / [SE(\%F).G^{1/2}] . (2/(G+1))^{[(G+1)/(2.(G-1))]}$$

Pour caractériser la section efficace du volet d'admission 5, on utilise, comme précédemment, la calibration de la section efficace SE du volet d'admission 5 en fonction de la position %F de ce volet. Ainsi, conformément au procédé selon l'invention, on détermine la pression de suralimentation par la formule (1) dite « de perte de charge », ce qui donne un premier résultat PS1, et on compare un premier rapport PC/PS1 entre la pression PC mesurée dans le collecteur 6 et ce premier résultat PS1 à un seuil d'application de la formule (1) dite « de perte de charge », égal à environ 0,9.

Ce seuil est déterminé empiriquement, et ne correspond pas à un seuil précis : le passage des conditions d'application de la formule (1) dite « de perte de charge » aux conditions d'applications de la formule (2) dite « du Barré de Saint Venant » se fait de façon continue.

Si le premier rapport PC/PS1 est supérieur au seuil choisi - ici 0,9 - la formule (1) dite « de perte de charge » s'applique, et le premier résultat PS1 est enregistré en tant que pression de suralimentation par l'unité de contrôle électronique 30.

Si le premier rapport PC/PS1 est inférieur au seuil choisi - ici 0,9 - la formule (1) dite « de perte de charge » ne s'applique pas, et la valeur PS1 ne représente pas une estimation correcte de la pression de suralimentation.

On détermine alors la pression de suralimentation par la formule (2) dite « du Barré de Saint Venant », ce qui donne un deuxième résultat PS2. On compare alors un deuxième rapport PC/PS2 entre la pression PC mesurée dans le collecteur 6 et ce deuxième résultat PS2, à un seuil d'application de la formule (2) dite « du Barré de Saint Venant », qui est égale à 0,53.

La valeur de ce seuil est précise et constitue un résultat connu de l'homme du métier.

Si le deuxième rapport PC/PS2 est supérieur au seuil d'application de la formule (2) dite « du Barré de Saint Venant », la formule (2) dite « du Barré de Saint Venant » s'applique, et le deuxième résultat PS2 est enregistré en tant que pression de suralimentation par l'unité de contrôle électronique 30.

Si le deuxième rapport PC/PS2 est inférieur ou égal au seuil d'application de la formule (2) dite « du Barré de Saint Venant », la formule (2) dite « du Barré de Saint Venant » ne s'applique pas, et la valeur PS2 ne représente pas une estimation correcte de la pression de suralimentation dans la conduite d'admission.

On détermine alors la pression de suralimentation par la formule (3) dite « du Barré de Saint Venant en régime critique », ce qui donne un troisième résultat PS3, qui est enregistré en tant que pression de suralimentation par l'unité de contrôle électronique 30.

La plage des pressions de suralimentation estimées par ce procédé est comprise entre $0,9.10^5$ Pascals et $2,5.10^5$ Pascals. L'incertitude sur la valeur calculée par ce procédé est d'environ +/- $0,05.10^5$ Pascals.

L'utilisation d'un tel procédé est particulièrement avantageuse dans le cas d'un moteur Diesel suralimenté disposant d'un piège à oxydes d'azote.

En effet, le fonctionnement du piège à oxydes d'azote lors de la phase de déstockage et de réduction des oxydes d'azote nécessite un contrôle précis de la quantité d'air introduite dans la chambre de combustion, qui peut être évaluée grâce à la pression de suralimentation.

Le contrôle d'un tel moteur requiert par ailleurs de très nombreux capteurs, et il est intéressant de pouvoir estimer cette pression de suralimentation par le procédé selon l'invention sans mesurer cette pression par l'intermédiaire d'un capteur supplémentaire.

Pendant une phase connue de régénération du piège à oxydes d'azote, on augmente la température du piège afin de brûler les particules bloquées dans un filtre à particules et qui peuvent nuire au fonctionnement du piège. Pour cela, le volet d'admission 5 est maintenu dans une position intermédiaire. On peut alors également avantageusement utiliser le procédé pour calculer la pression en amont de ce volet d'admission 5.

Pendant d'autres phases de fonctionnement du piège à oxydes d'azote, l'unité de contrôle électronique 30 impose avantageusement que la pression de suralimentation PS soit égale à la pression dans le collecteur PC.

## Revendications

1. Procédé d'estimation de la pression de suralimentation (PS) d'un gaz circulant dans une conduite d'admission (4) de section géométrique (SC) connue d'un moteur Diesel suralimenté, contrôlé par une unité de contrôle électronique (30), comportant un volet d'admission (5) dont une section efficace (SE) dépend de sa position (%F) dans la conduite d'admission (4) et un collecteur (6), la section géométrique (SC) de la conduite d'admission (4), la constante spécifique (R) du gaz circulant dans la conduite d'admission (4) et le rapport (G) entre la capacité calorifique à pression constante et la capacité calorifique à volume constant caractéristique du gaz circulant dans la conduite d'admission (4) étant préalablement enregistrés dans la mémoire de l'unité de contrôle électronique (30), ledit procédé comportant les étapes suivantes :

   a) on enregistre la position (%F) du volet d'admission (5);
   b) on mesure la pression (PC) du gaz dans le collecteur (6) ;
   c) on mesure la température (TV) du gaz entre le volet d'admission (5) et le collecteur (6) ;
   d) on détermine le débit du gaz (QV) au niveau du volet d'admission (5) ;
   e) on détermine la section efficace (SE(%F)) du volet d'admission (5) et un coefficient correcteur de perte de charge (CP(%F)) en fonction de ladite position du volet d'admission (5) ;
   f) on détermine la pression de suralimentation (PS) par une formule dite « de perte de charge » donnant une première pression PS1 calculée, selon laquelle:

$$PS1 = PC + (QV^2.R.TV)/(2.PC.SC^2) \, . \, CP(\%F)$$

   g) on compare le rapport (PC/PS1) entre la pression dans le collecteur (PC) et le résultat obtenu à l'étape f) à une valeur seuil (SPC), dite « de perte de charge » : si ce rapport (PC/SP1) est supérieur à ladite valeur seuil (SPC), alors on enregistre ledit résultat de l'étape f) en tant que pression de suralimentation (PS) ; sinon, on effectue les étapes suivantes ;
   h) on détermine la pression de suralimentation (PS) par une autre formule dite « du Barré de Saint Venant », donnant une deuxième pression PS2 calculée, selon laquelle:

$$PS2 = PC.[\, 1/2 + (\, 1/4 + (QV^2.R.TV)/(SE(\%F)^2.PC^2).(G-1)/(2.G)\,)^{1/2}\,]^{(G/(G-1))}$$

   i) on compare le rapport (PC/PS2) entre la pression dans le collecteur (PC) et le résultat de l'étape h) à une valeur seuil (SBSV), dite « du Barré de Saint Venant » : si ce rapport (PC/PS2) est supérieur à ladite valeur seuil (SBSV) dite « du Barré de Saint Venant », alors on enregistre ledit résultat de l'étape h) en tant que pression de suralimentation (PS) ; sinon, on effectue l'étape suivante ;
   j) on détermine la pression de suralimentation (PS) par une troisième formule dite « du Barré de Saint Venant en régime critique », selon laquelle :

$$PS3 = QV.(R.TV)^{1/2} / [\, SE(\%F).G^{1/2}\,] . (\, 2/(G+1)\,)^{[\,(G+1)/(2.(G-1))\,]}$$

et on enregistre le résultat alors obtenu comme pression de suralimentation (PS).

2. Procédé selon la revendication précédente, dans lequel la section efficace (SE) du volet d'admission (5) est déterminée par une calibration dépendant uniquement de la position du volet d'admission (%F).

3. Procédé selon l'une des revendications précédentes, dans lequel le coefficient correcteur de perte de charge (CP) est déterminé par une calibration dépendant uniquement de la position du volet d'admission (%F).

4. Utilisation du procédé selon l'une des revendications précédentes, lors des phases de déstockage et de réduction des oxydes d'azote dans le piège à oxydes d'azote (11) pour maintenir un rapport stoechiométrique entre les quantités d'air et de carburant introduites dans la chambre de combustion (23).

5. Utilisation du procédé selon la revendication précédente, dans laquelle l'unité de contrôle électronique (30) impose que la pression de suralimentation (PS) soit égale à la pression dans le collecteur (PC) en dehors des phases de déstockage et de réduction des oxydes d'azote et de régénération du piège à oxydes d'azote (11).

**Patentansprüche**

1. Verfahren zur Schätzung des Überladedrucks (PS) eines Gases, das in einer Einlassleitung (4) mit bekanntem geometrischem Querschnitt (SC) eines aufgeladenen Dieselmotors zirkuliert, unter der Kontrolle einer elektronischen Kontrolleinheit (30), umfassend eine Einlassklappe (5), deren Wirkquerschnitt (SE) von ihrer Position (%F) in der Einlassleitung (4) abhängt, und einen Kollektor (6), wobei der geometrische Querschnitt (SC) der Einlassleitung (4), die spezifische Konstante (R) des in der Einlassleitung (4) zirkulierenden Gases und das Verhältnis (G) zwischen der Wärmeleistung bei konstantem Druck und der Wärmeleistung bei konstantem Volumen, die für das in der Einlassleitung (4) zirkulierende Gas charakteristisch ist, vorher in dem Speicher der elektronischen Kontrolleinheit (30) aufgezeichnet werden, wobei das Verfahren die folgenden Schritte umfasst:

a) Aufzeichnen der Position (%F) der Einlassklappe (5);
b) Messen des Drucks (PC) des Gases im Kollektor (6) ;
c) Messen der Temperatur (TV) des Gases zwischen der Einlassklappe (5) und dem Kollektor (6);
d) Bestimmen der Gasmenge (QV) im Bereich der Einlassklappe (5);
e) Bestimmen des Wirkquerschnitts (SE(%F)) der Einlassklappe (5) und eines Ladeverlustkorrekturkoeffizienten (CP(%F)) in Abhängigkeit von der Position der Einlassklappe (5);
f) Bestimmen des Überladedrucks (PS) durch eine so genannte "Ladeverlustformel", die einen ersten berechneten Druck PS1 ergibt, nach der:

$$PS1 = PC + (QV^2.R.TV)/(2.PC.SC^2).CP(\%F)$$

g) Vergleichen des Verhältnisses (PC/PS1) zwischen dem Druck im Kollektor (PC) und dem in Schritt f) erhaltenen Resultat mit einem so genannten "Ladeverlust"-Grenzwert (SPC): wenn dieses Verhältnis (PC/SP1) größer als der Grenzwert (SPC) ist, wird das Resultat des Schrittes f) als Überladedruck (PS) aufgezeichnet; andernfalls werden die folgenden Schritte durchgeführt:

h) Bestimmen des Überladedrucks (PS) durch eine andere, so genannte "Saint Venant"-Formel, die einen zweiten berechneten Druck PS2 ergibt, nach der:

$$PS2 = PC.[1/2 + (1/4 + (QV^2.R.TV)/(SE(\%F)^2.PC^2).(G-1)/(2.G))^{1/2}]^{(G/(G-1))}$$

i) Vergleichen des Verhältnisses (PC/PS2) zwischen dem Druck im Kollektor (PC) und dem Resultat aus Schritt h) mit einem so genannten "Saint Venant"-Grenzwert (SBSV): wenn das Verhältnis (PC/PS2) größer als der so genannte "Saint Venant"-Grenzwert (SBSV) ist, wird das Resultat aus Schritt h) als Überladedruck (PS) aufgezeichnet; andernfalls wird folgender Schritt durchgeführt:

j) Bestimmen des Überladedrucks (PS) durch eine dritte so genannte kritische "Saint Venant"-Formel, nach der:

$$PS3 = QV.(R.TV)^{1/2}/[SE(\%F).G^{1/2}].(2/G+1))^{[(G+1)/(2.(G-1))]}$$

und Aufzeichnen des nun erhaltenen Resultats als Überladedruck (PS).

2. Verfahren nach dem vorhergehenden Anspruch, bei dem der Wirkquerschnitt (SE) der Einlassklappe (5) durch eine Kalibrierung bestimmt wird, die nur von der Position der Einlassklappe (%F) abhängt.

3. Verfahren nach einem der vorhergehenden Ansprüche, bei dem der Ladeverlustkorrekturkoeffizient (CP) durch eine Kalibrierung bestimmt wird, die nur von der Position der Einlassklappe (%F) abhängt.

4. Verwendung des Verfahrens nach einem der vorhergehenden Ansprüche während Phasen von Abbau und Reduktion der Stickoxide in der Stickoxidfalle (11), um ein stöchiometrisches Verhältnis zwischen den Luft- und Treibstoffmengen, die in die Brennkammer (23) eingeleitet werden, aufrechtzuerhalten.

5. Verwendung des Verfahrens nach dem vorhergehenden Anspruch, bei dem die elektronische Kontrolleinheit (30) vorgibt, dass der Überladedruck (PS) gleich dem Druck im Kollektor (PC) außerhalb der Phasen von Abbau und Reduktion der Stickoxide und Regeneration der Stickoxidfalle (11) ist.

## Claims

1. Method of estimating the boost pressure (PS) of a gas circulating in an intake duct (4) of known geometric cross section (SC) of a supercharged diesel engine, controlled by an electronic control unit (30), comprising an intake flap (5) of which an effective cross section (SE) is dependent on its position (%F) in the intake duct (4) and a manifold (6), the geometric cross section (SC) of the intake duct (4), the specific gas constant (R) for the gas circulating in the intake duct (4) and the ratio (G) between the characteristic specific heat capacity at constant pressure and the specific heat capacity at constant volume of the gas circulating in the intake duct (4) being recorded beforehand in the memory of the electronic control unit (30), the said method comprising the following steps:

a) the position (%f) of the intake flap (5) is recorded;
b) the pressure (PC) of the gas in the manifold (6) is measured;
c) the temperature (TV) of the gas between the intake flap (5) and the manifold (6) is measured;
d) the gas flow rate (QV) at the intake flap (5) is determined;
e) the effective cross section (SE(%F)) of the intake flap (5) is determined as is a coefficient (CP(%F)) correcting for pressure drop as a function of the said position of the intake flap (5);
f) the boost pressure (PS) is determined using a so-called "pressure drop" formula giving a first calculated pressure PS1 according to which:

$$PS1 = PC + (QV^2.R.TV)/(2.PC.SC^2). CP(\%F)$$

g) the ratio (PC/PS1) between the pressure in the manifold (PC) and the result obtained in step f) is compared against a threshold value (SPC) referred to as the "pressure drop" threshold value: if this ratio (PC/SP1) is higher than the said threshold value (SPC) then the said result of step f) is recorded as the boost pressure (PS); and if not, the following steps are performed:

h) the boost pressure (PS) is determined using another formula referred to as the "Saint-Venant" formula, giving a second calculated pressure PS2, according to which:

$$PS2 = PC.[1/2+(1/4+(QV^2.R.TV)/(SE(\%F)^2.PC^2).(G-1)/(2.G))^{1/2}]^{'G/(G-1))}$$

i) the ratio (PC/PS2) between the pressure in the manifold (PC) and the result of step h) is compared to a threshold value (SBSV) referred to as the "Saint-Venant" threshold value: if this ratio (PC/PS2) is higher than the said threshold value (SBSV) referred to as the "Saint-Venant" threshold value then the said result of step h) is recorded as the boost pressure (PS); if not the following step is performed:

j) the boost pressure (PS) is determined using a third formula referred to as the "critical-conditions Saint-Venant" formula, according to which:

$$PS3 = QV.(R.TV)^{1/2}/[SE(\%F).G^{1/2}].(2/(G+1))^{[(G+1)/(2.(G-1))]}$$

and the result then obtained is recorded as the boost pressure (PS).

2. Method according to the preceding claim, in which the effective cross section (SE) of the intake flap (5) is determined by a calibration dependent solely on the position of the intake flap (%F).

3. Method according to one of the preceding claims, in which the pressure drop corrective coefficient (CP) is determined by a calibration dependent solely on the position of the intake flap (%F).

4. Use of the method according to one of the preceding claims, during the phases of desorption and reduction of the nitrogen oxides in the nitrogen oxides trap (11) in order to maintain a stoichiometric ratio between the quantities of air and of fuel which are introduced into the combustion chamber (23).

5. Use of the method according to the preceding claim, in which the electronic control unit (30) imposes that the boost pressure (PS) be equal to the pressure in the manifold (PC) outside of the phases of desorption and reduction of the nitrogen oxides and of regeneration of the nitrogen oxides trap (11).

Figure unique

## RÉFÉRENCES CITÉES DANS LA DESCRIPTION

**Documents brevets cités dans la description**

- US 6035640 A
- US 2003010019 A